# FASCICULE DE BREVET EUROPEEN

(11) **EP 2 076 075 B1**
(45) Date de publication et mention de la délivrance du brevet: **17.06.2015**
(21) Numéro de dépôt: 08291247.8
(22) Date de dépôt: 29.12.2008
(51) Int. Cl.: H04W 24/04, H04L 12/24, H04W 4/22, H04W 76/00, H04W 76/02, H04W 84/22, H04W 92/14, H04W 92/12

(54) **Dispositif de gestion de communication déclenché en cas de catastrophe dans un réseau de télécommunications**
Vorrichtung zur Kommunikationsverwaltung aktiviert im Katastrophenfall in einem Telekommunikationsnetzwerk
Communication management device activated in case of disaster in a telecommunications network

(30) Priorité: 31.12.2007 FR 0709182
(43) Date de publication de la demande: 01.07.2009
(73) Titulaire: Société Française du Radiotéléphone, 75008 Paris (FR)
(72) Inventeur: Ha, Thanh-Luu, 77600 Bussy Saint Georges (FR); Wary, Jean-Philippe, 92340 Bourg la Reine (FR)
(74) Mandataire: Debay, Yves

(56) Documents cités:
- US-A1- 2001 030 941
- US-A1- 2005 192 005
- US-B1- 6 724 720
- US-B1- 7 039 402

## Description

Le domaine de la présente invention est celui des télécommunications. Plus particulièrement, il s'agit d'un dispositif de gestion de communication dans un réseau de communication par ondes radiofréquences, activé lorsque la structure du réseau est endommagée ou que ses ressources matérielles sont limitées, suite par exemple à une catastrophe naturelle.

Un réseau de communication radiofréquence, comme par exemple un réseau cellulaire pour des terminaux mobiles, est basé sur une structure comprenant des noeuds de communication. Ces noeuds de communication constituent des carrefours ou des passages intermédiaires par lesquels des données sont acheminées. Un réseau cellulaire a l'avantage d'établir une communication sans contact avec les terminaux mobiles, par une liaison radiofréquence. Un réseau cellulaire nécessite cependant que des stations de base, réalisant cette liaison radiofréquence, soient connectées à la structure de support du réseau qui comprend des lignes électriques ou optiques de communication reliant les noeuds de communication.

Un problème technique concernant les réseaux de communication par ondes radiofréquences est qu'en cas de catastrophe naturelle, une ou plusieurs stations de base peuvent être coupées de la structure de support du réseau et certaines zones géographiques sont alors isolées et coupées du réseau de communication. Les habitants de ces régions se trouvent alors privés de moyens de communication qui permettraient de faciliter l'intervention de secours. Le réseau par câbles électriques ou optiques peut en effet être endommagé, en isolant une station de base ou un groupe de stations de base, qui sont alors inopérantes même si leurs fonctions de liaison par ondes radiofréquences avec les terminaux mobiles, sont toujours en état de marche.

La demande US 2001/0030941, divulgue une méthode et un système prévus pour la configuration d'un réseau de communications mobiles, comme par exemple un système de stations de base sous IP qui permet d'assurer une importante disponibilité des éléments du réseau particulièrement lors de la survenance de catastrophes naturelles. Toutefois, la demande US 2001/0030941 ne permet pas d'apporter une solution au problème de la disparition des éléments supérieurs du réseau mobile, tels que, par exemple, le cas où les liens vers les routeurs ou les enregistreurs de localisation nominal ne seraient plus disponibles et/ou le cas où les contrôleurs de station de base ou les contrôleurs de réseau ne seraient plus accessibles depuis les stations de base.

La présente invention a pour objet de pallier un ou plusieurs des inconvénients de l'art antérieur en proposant un dispositif permettant d'exploiter une ou plusieurs stations de base, par exemple isolées de la structure de support d'un réseau cellulaire, suite à une catastrophe naturelle (séisme, inondation, incendie, ouragan...) par exemple, pour permettre l'établissement de communications et la transmission d'informations. De façon simplifiée, les structures de télécommunication, « rescapées » suite à une catastrophe naturelle, d'un réseau cellulaire sont remises en communication ou interconnectées via l'établissement d'un réseau maillé (de type MESH) utilisant les technologies « encore » disponible de communication après la catastrophe. C'est technologies de communication encore disponibles pouvant être, de façon non limitative de l'invention, basées sur l'usage, non exclusif, de liens IP, de communication via les technologies de courant porteur, de liens wifi/wimax, Bluetooth®, de liaisons fixes ou radio fréquence, point à point (X25, frame relay, ATM...) ou broadcast, de technologies satellitaires. L'ensemble des éléments réseau « rescapés » deviennent donc des noeuds de réseau MESH, sur lesquels diverses technologies de routage hétérogènes sont mise en oeuvre dans le but d'offrir des interconnections et du routage de bout en bout de façon à maintenir un service de communication dégradé du point de vu de l'utilisateur. Plusieurs protocoles de routage sont aujourd'hui des candidats potentiels à ces applications, ils sont listés ci-après à titre indicatif et non restrictif de l'invention : HWMP (Hybrid Wireless Mesh Protocol), basé sur RM-ADOV (Radio Metric Ad-hoc ON Demand Distance Vector), RFC 3561, RA-OLSR (Radio Aware Optimise Link State Routing), DSDV, HSLS, BATMAN, OORP, TORA. Une fois les éléments « rescapés » du réseau interconnectés, il est nécessaire de mettre en oeuvre des éléments permettant de simuler, pour les éléments « rescapés », la partie absente du réseau de communication cellulaire, ce point est en particulier nécessaire pour gérer les plans de fréquence, les allocations de canaux et les automates d'état des clients (procédures d'authentification lors de l'accès d'un mobile à un réseau GSM par exemple). Un intérêt de notre invention est le parc existant aujourd'hui de plus de 2 milliards de mobiles de type GSM 2G et 3G dans le monde, c'est-à-dire que l'ensemble de ces utilisateurs sont déjà dotés de terminaux inter opérables sur tous les réseaux 2G/3G du monde, donc capable de négocier des services de télécommunications les plus dégradé en terme d'usage de ressource. L'invention permet d'interconnecter les infrastructures « rescapées » de l'ensembles des opérateurs de télécommunication (fixe ou mobile) présents dans la zone de la catastrophe et de les faire interopérer, l'ensemble des mécanismes de routage étant gérés par les protocoles MESH mis en oeuvre indépendamment des équipement télécoms, de façon à offrir une couverture optimale des services d'urgence.

Cet objectif est atteint grâce au dispositif de gestion de communication de la revendication 1 et au réseau de télécommunication de la revendication 12. Le dispositif de gestion de communication comprend des moyens de mémorisation et des moyens de traitement, disposé dans un réseau de télécommunication comprenant au moins une station de base en liaison par ondes radiofréquences avec au moins un premier terminal, la station de base étant reliée, par une première ligne de communication, à un dispositif contrôleur de la station de base, le dispositif contrôleur de la station de base étant relié, par une seconde ligne de communication, à un routeur,
caractérisé en ce que le dispositif de gestion de communication est disposé sur la première ou respectivement la seconde ligne, et est activé, par des moyens d'activation en cas de dégradation de la première ou respectivement de la seconde ligne,
le dispositif de gestion de communication comprenant au moins une table mémorisée comprenant des données associées à chacun des terminaux reliés par au moins une liaison radiofréquence, électrique ou optique, au dispositif de gestion de communication, les données associées à chacun des terminaux comprenant au moins :
- une donnée représentative d'un identifiant du terminal ou de son utilisateur, résidant en mémoire de chaque terminal,
- une donnée représentative d'un identifiant déterminé par l'utilisateur du terminal,
le dispositif de gestion de communication activé, commandant, par ses moyens de traitement, l'établissement d'au moins une communication entre le premier terminal et un second terminal parmi les terminaux reliés au dispositif de gestion de communication.

Selon une autre particularité, le dispositif de gestion de communication comprend des moyens de recherche de connexions possibles via différentes ressources disponibles et d'établissement des liaisons radiofréquences, électriques ou optiques avec les terminaux reliés

Selon une autre particularité, le dispositif de gestion de communication est disposé sur la première ligne et commande, dans son état activé, l'établissement de la communication par au moins un canal radiofréquence déterminé dans la station de base, associé au premier terminal.

Selon une autre particularité, le dispositif de gestion de communication est disposé sur la seconde ligne et comporte des moyens de recherche des connexions possibles aux différentes ressources disponibles pour accéder à un terminal, la table comprenant des données représentatives d'un chemin d'accès, associées à chacun des terminaux reliés au dispositif de gestion de communication, le chemin d'accès du premier terminal comprenant au moins un identifiant de la station de base, et du réseau auquel cette station de base reste reliée.

Selon une autre particularité, le dispositif de gestion de communication comprend une passerelle vers au moins :
- un réseau d'administration des noeuds de communication ou
- le réseau Internet ou
- un réseau local radiofréquence ou
- un réseau cellulaire radiofréquence.

Selon une autre particularité, le dispositif de gestion de communication est activé par un branchement manuel de connecteurs réalisé par un opérateur ou est activé automatiquement par un dispositif de détection d'une panne ou d'une coupure sur la première ou la seconde ligne de communication.

Selon une autre particularité, le dispositif de gestion de communication comprend au moins un programme implanté dans une station de base ou un dispositif contrôleur, activable en cas de catastrophe ou résidant dans une clé ou une cartouche et connectable à la place de la ligne de communication détériorée, le programme contenant au moins trois couches de communication :
- une couche de médiation permettant de rendre compatibles des commandes de gestion enregistrées dans une couche adhoc avec des commandes connues de la station de base ou du dispositif contrôleur,
- la couche adhoc enregistrant les tables et établissant des messages de recherche des terminaux,
- une couche de transport permettant de convertir des messages dans les protocoles des différents réseaux encore utilisables et de diffuser ces messages.

Selon une autre particularité, la donnée résidant en mémoire de chaque terminal représentative d'un identifiant du terminal est le code IMEI (International Mobile Equipment Identity), la donnée résidant en mémoire de chaque terminal représentative d'un identifiant de l'utilisateur du terminal est le code IMSI (International Mobile Subscriber Identity) et la donnée représentative d'un identifiant déterminé par l'utilisateur du terminal est son numéro d'abonné ou correspond à un code d'appel d'urgence.

Selon une autre particularité, le dispositif de gestion de communication établit une communication entre deux terminaux selon :
- des tranches temporelles déterminées d'alternance des communications ou
- une première durée maximum déterminée pour une communication entre deux utilisateurs identifiés par leur numéro d'abonné,
- une deuxième durée maximum déterminée supérieure à la première, pour une communication entre un utilisateur identifié par son numéro d'abonné appelant un utilisateur identifié par un code d'appel d'urgence,
- une durée illimitée pour une communication initiée par un utilisateur identifié par un code d'appel d'urgence.

Selon une autre particularité, le dispositif de gestion de communication envoie à l'ensemble des terminaux qui lui sont reliés, au moins un type de message comprenant des données représentatives d'un code d'authentification nécessaire à l'acceptation du message.

Selon une autre particularité, le dispositif de gestion de communication commande la réinitialisation de ladite station de base, la table comprenant un type de donnée réglée dans un état représentatif du gain d'antenne transmis à la connexion avec ladite station de base.

Un autre objet de la présente invention est de proposer, par l'utilisation du dispositif de gestion de communication, la reconstitution d'un réseau de télécommunication permettant d'exploiter une ou plusieurs stations de base, isolées de la structure de support du réseau, pour permettre l'établissement de communications et la transmission d'informations

Cet objectif est atteint grâce à un réseau de télécommunication comprenant au moins une station de base en liaison par ondes radiofréquences avec au moins un premier terminal, la station de base étant reliée, par une première ligne de communication, à un dispositif contrôleur de la station de base, le dispositif contrôleur étant relié, par une seconde ligne de communication, à un routeur, caractérisé en ce qu'il comprend, sur au moins la première ou respectivement la seconde ligne de communication, un dispositif de gestion de communication comprenant des moyens de traitement et des moyens de mémorisation d'au moins un programme de recherche de terminaux reliés et de gestion de communication, le dispositif de gestion de communication étant activé, par des moyens d'activation en cas de dégradation de la première ou respectivement de la seconde ligne,
le dispositif de gestion de communication comprenant au moins une table mémorisée comprenant des données associées à chacun des terminaux reliés par au moins une liaison radiofréquence, électrique ou optique, au dispositif de gestion de communication, les données associées à chacun des terminaux comprenant au moins :
- une donnée représentative d'un identifiant du terminal ou de son utilisateur, résidant en mémoire de chaque terminal,
- une donnée représentative d'un identifiant déterminé par l'utilisateur du terminal,
le dispositif de gestion de communication activé, effectuant, par des modules de gestion de transport de son programme, la recherche des liens de communication encore disponibles sur différents réseaux reliés au dispositif de gestion de communication et diffusant sur ces réseaux lors de la recherche de connexions avec au moins un second terminal, un message d'appel du second terminal puis enregistrant dans sa table le cheminement lors de la réponse du second terminal.

L'invention, ses caractéristiques et ses avantages apparaîtront plus clairement à la lecture de la description faite en référence aux figures ci-dessous référencées et données à titre d'exemples non limitatifs :
- la figure 1 représente un exemple de dispositif de gestion de communication, selon l'invention, associé à une station de base dont la liaison dite Abis est endommagée ;
- la figure 2 représente un exemple de dispositif de gestion de communication, selon l'invention, associé à un contrôleur dont la liaison dite Abis est endommagée ;

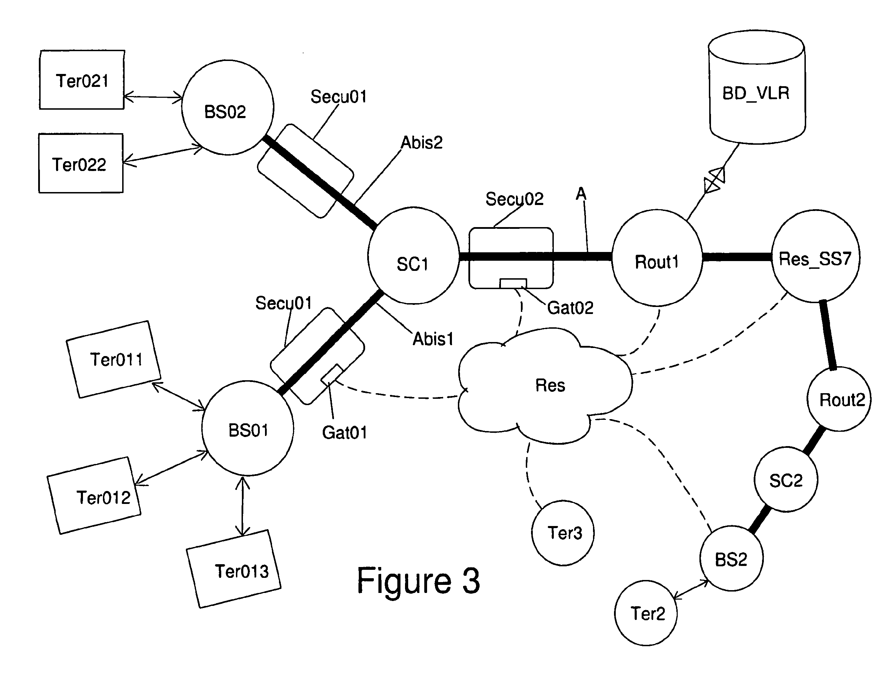

- la figure 3 représente un exemple d'architecture d'un réseau équipé de dispositifs de gestion de communication selon l'invention ;
- la figure 4 représente un exemple d'architecture d'un dispositif de gestion de communication selon l'invention.

L'invention va à présent être décrite en référence aux figures précédemment citées. Dans un réseau cellulaire, par exemple du type GSM (Global System for Mobile Communications) ou UMTS (Universal Mobile Telecommunications System), les stations de base (BS01, BS02, BS2) peuvent être en communication, par liaison radiofréquence, avec un ou plusieurs terminaux (Ter011, Ter012, Ter013, Ter021, Ter022, Ter2). Les stations de base sont par exemple des stations de type BTS (Base Transceiver Station) pour le réseau GSM ou des stations de type Node B pour le réseau UMTS. Un contrôleur (SC1, SC2) commande une ou plusieurs stations de base. Le contrôleur est, par exemple, un contrôleur du type BSC (Base Station Controller) pour le réseau GSM, ou un contrôleur du type RNC (Radio Network Controller) pour le réseau UMTS.

Une station (BS01) de base réalise, par exemple, l'établissement d'une liaison radiofréquence avec chacun des terminaux (Ter011, Ter012, Ter013) se trouvant dans sa zone de couverture et transfère des données entre ces terminaux (Ter011, Ter012, Ter013) et son contrôleur (SC1). Après l'établissement de la liaison radiofréquence avec un terminal, la station de base, transmet, par exemple, de manière non limitative, des données représentatives :
- d'un identifiant du terminal, comme par exemple, son code IMEI (International Mobile Equipment Identity),
- d'un identifiant de l'utilisateur du terminal, comme par exemple son code IMSI (International Mobile Subscriber Identity),
- d'un identifiant de la station de base elle-même,
- du gain d'antenne du terminal qui correspond à la puissance d'émission du terminal, la puissance d'émission étant fonction d'au moins la distance entre le terminal et la station de base.

Une station (BS01, BS02) de base est reliée à son contrôleur (SC1) par une liaison, comme par exemple liaison de type Abis. Les fréquences de communication correspondant aux canaux de communication utilisés par la station de base pour communiquer avec le terminal sont, par exemple, gérées par le contrôleur qui commande alors cette station de base. Le contrôleur (SC1) comprend d'autre part une liaison (A1) avec la structure de support du réseau, par exemple vers un dispositif (Rout1) de routage. La liaison entre le contrôleur (SC1) et le routeur (Rout1) est par exemple une liaison de type A.

Des données transmises par un réseau cellulaire déterminé sont encodées selon un protocole déterminé comprenant des programmes de codage et de décodage de la voix. Ce programme de codage permet de transformer des données représentatives de la voix, obtenues par un composant d'interface sonore du terminal, en données optimisées pour le transport, par exemple selon le protocole RTP (Real-time Transport Protocol) pour un usage sur une technologie de transport de type paquet (particulièrement bien adapté pour les technologies réseau IP). Les données représentatives de la voix sont généralement de taille importante et sont transportées sur des lignes dédiées, comme par exemple une ligne A ou une ligne Abis, ayant une grande capacité de transport pour les données, ligne non nécessairement couplées avec le transport de la signalisation. Des lignes d'administration, de capacité de transport moindre, reliées aux noeuds de communication, sont généralement disposées dans le réseau, parallèlement ou en plus des lignes de signalisation et transport des données. Ces lignes d'administration sont réalisées pour des transferts de données à faible débit, par exemple, pour commander un noeud de communication.

Un contrôleur (SC1) est par exemple en communication d'une part avec plusieurs stations (BS01, BS02) de base et d'autre part avec un routeur (Rout1), comme par exemple un routeur du type MSC (Mobile Switching Center). Le routeur (Rout1) communique avec le réseau international de communication (Res_SS7), également désigné par la norme SS7 (Signaling System 7). Un terminal situé en France réalisera par exemple une connexion avec un terminal (Ter2) situé à l'étranger, via ce réseau (Res_SS7) international. De même à l'étranger, la communication passe, par exemple, par un routeur (Rout2) puis par un contrôleur (SC2) et une station de transmission de base (BS2), pour établir la liaison avec le terminal (Ter2).

Le routeur (Rout1) communique, par exemple, aussi avec une base de données locale (BD_VLR) alimentée par une base de données centrale comprenant les données représentatives des contrats des abonnés. Les données de la base (BD_VLR) de données locale sont, par exemple, les données correspondant aux terminaux (Ter021, Ter022, Ter11, Ter012, Ter013) en communication avec des stations (BS01, BS02) de base gérées par un ou plusieurs contrôleurs (SC1) gérés par ce routeur (Rout1). La zone de couverture gérée ainsi par le routeur (Rout1) est par exemple désignée comme son aire de localisation, également appelée « location area ».

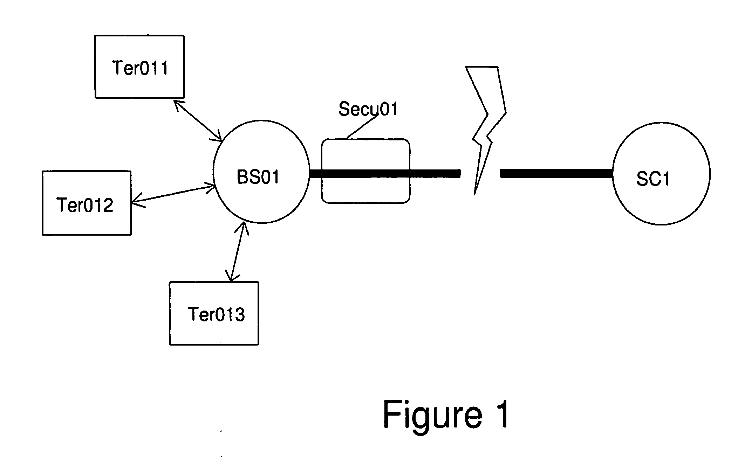

Lors d'une catastrophe naturelle, une station (BS1, BS2) de base peut être séparée de son contrôleur (SC1). Cette liaison (Abis1, Abis2), par exemple de type Abis, peut en effet être coupée ou tomber en panne. Un câble électrique ou optique reliant la station (BS01, BS02) de base au contrôleur peut être coupé ou subir des interférences provenant de son environnement extérieur, rendant la liaison inopérante. Un tel cas de figure est, par exemple, représenté à la figure 1. La station (BS01) de base alimentée en énergie électrique, par exemple, par le réseau électrique ou par ses réserves d'énergie, établit des communications entre un terminal (Ter011, Ter012, Ter013) dans sa zone de couverture et un autre terminal, grâce au dispositif (Secu01) de gestion de communication associé. Le dispositif (Secu01) de gestion de communication associé à la station (BS01) de base permet d'établir une communication, par exemple sans utiliser la liaison (Abis1) de signalisation/transport des données avec son contrôleur (SC1). Deux terminaux (Ter011, Ter012) dans la zone de couverture de la station (BS01) de base établiront, par exemple, une communication entre eux. Un terminal dans la zone de couverture peut aussi être relié à un terminal hors de la zone de couverture, par exemple en passant par un autre réseau. Le dispositif (Secu01) de gestion de communication comprend, par exemple, une passerelle (Gat01) d'accès à cet autre réseau (Res).

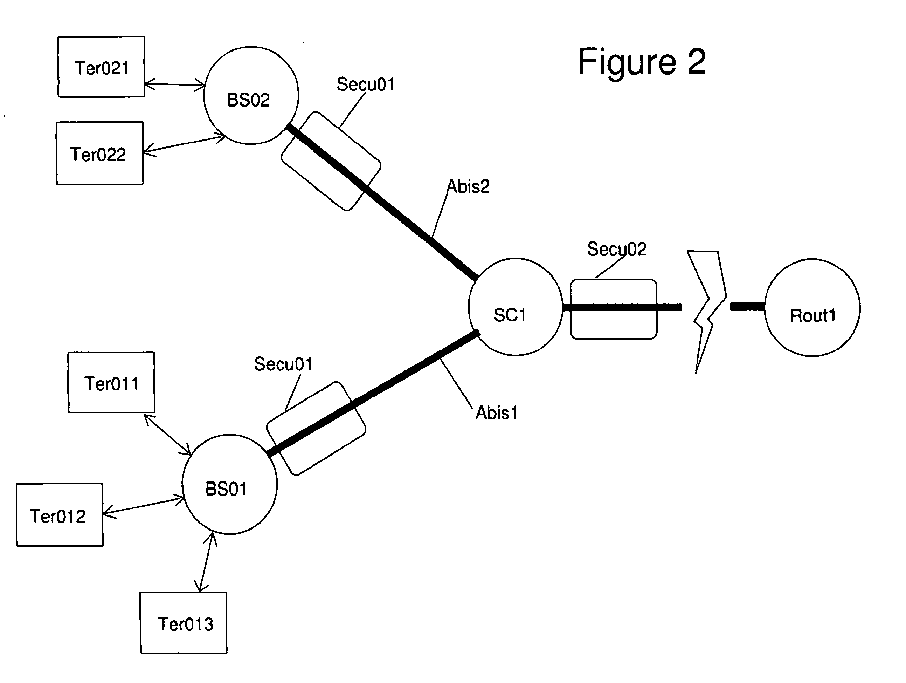

Lors d'une catastrophe naturelle, un contrôleur (SC1) peut aussi être séparé de la structure de support du réseau, en conservant un ou plusieurs liens (Abis1, Abis2) avec des stations (BS01, BS02) de base commandées par ce contrôleur (SC1), comme représenté à la figure 2. La liaison (A1), comme par exemple la liaison A avec son routeur (Rout1), peut être coupée ou tomber en panne. La liaison optique ou électrique est, par exemple, coupée ou exposée à des perturbations. Le contrôleur (SC1), alimenté en énergie électrique par le réseau électrique ou par des réserves d'énergie, établit alors des communications entre un terminal disposé dans la zone de couverture d'une des stations de base gérées par ce contrôleur, et un autre terminal, grâce au dispositif (Secu02) de gestion de communication. Le dispositif (Secu02) de gestion de communication, associé au contrôleur (SC1), permet d'établir une communication, par exemple sans utiliser la liaison (A1) avec son routeur (Rout1). Deux terminaux dans la zone de couverture peuvent ainsi communiquer entre eux. Un terminal dans la zone de couverture peut aussi communiquer à l'extérieur de cette zone, via une passerelle (Gat02) d'accès à un autre réseau (Res).

De manière non limitative, un dispositif (Secu01, Secu02) de gestion de communication sera intégré dans une station (BS01, BS02) de base ou respectivement dans un contrôleur (SC1) et disposé sur la ligne Abis (Abis1, Abis2) ou respectivement la ligne A (A1). Le dispositif de gestion de communication est par exemple branché par un opérateur, dans la station de base ou respectivement dans le contrôleur, sur la ligne Abis ou respectivement A. Le branchement est par exemple, réalisé sur ordre de la préfecture, lors d'une situation d'urgence.

Selon un autre exemple de réalisation, le dispositif de gestion de communication est branché en permanence sur une ligne de signalisation/transport de données et est activé manuellement par un opérateur ou automatiquement par un dispositif de détection d'une panne ou d'une coupure sur cette ligne. De manière non limitative, le dispositif de détection de panne est intégré au dispositif (Secu01, Secu02) de gestion de communication. Un programme (PRG_Det) de détection de panne est, par exemple, exécuté en boucle, dans un mode dormant du dispositif de gestion de communication, jusqu'à la détection d'une panne qui déclenche un passage dans un mode actif. Le programme (PRG_Det) de détection exécuté par des moyens (P) de traitement, traite par exemple des données lues sur le port (CON1) de connexion à la ligne de signalisation. La ligne de signalisation est par exemple, une ligne Abis ou une ligne A, sur laquelle est disposé le dispositif (Secu01, Secu02) de gestion de communication.

De façon avantageuse le dispositif (Secu01, Secu02) de gestion de communication branché sur une ligne (Abis1, Abis2, A1) de transport de données ou de signalisation, comprend des moyens (PRG_Rout, TAB_Rout) de gestion des communications réalisés conformément aux protocoles de communication en usage sur cette ligne. Le dispositif (Secu01, Secu02) de gestion de communication peut réaliser les commandes pour établir des communications entre terminaux et même envoyer des réponses factices vers un noeud (BS01, BS02, SC1) de communication de façon à respecter le protocole de communication. Ainsi les stations (BS01, BS02) de base ou les contrôleurs (SC1) équipés d'un dispositif (Secu01, Secu02) de gestion de communication peuvent être peu modifiés voire pas du tout modifiés, lors de l'équipement de ces noeuds (BS01, BS02, SC1) de communication avec un dispositif de gestion de communication. Ce point est parfaitement illustré au travers d'un simulateur de fonctionnement de l'authentification des clients du réseau mobile, ce simulateur se contentant par exemple d'envoyer la requête d'authentification prévue par la norme avec une valeur de challenge (si requise) constante, et d'accepter de façon systématique l'ensemble des réponses à ces challenges, puis de négocier des établissement d'appels sans autres services de sécurité (en particulier inactivation des services de chiffrement des communications).

De manière non limitative, le dispositif de gestion de communication est réalisé sous la forme d'une carte électronique ou une cartouche ou une clé connectable à la ligne de communication de type A ou Abis ou à la station de base ou à son contrôleur. Le dispositif de gestion de communication prend par exemple la forme d'un composant électronique comprenant ses propres moyens de traitement. Le dispositif de gestion de communication peut aussi prendre la forme d'un programme intégré dans une station de base ou respectivement un contrôleur, pour être exécuté par les moyens de traitement de la station de base ou respectivement du contrôleur.

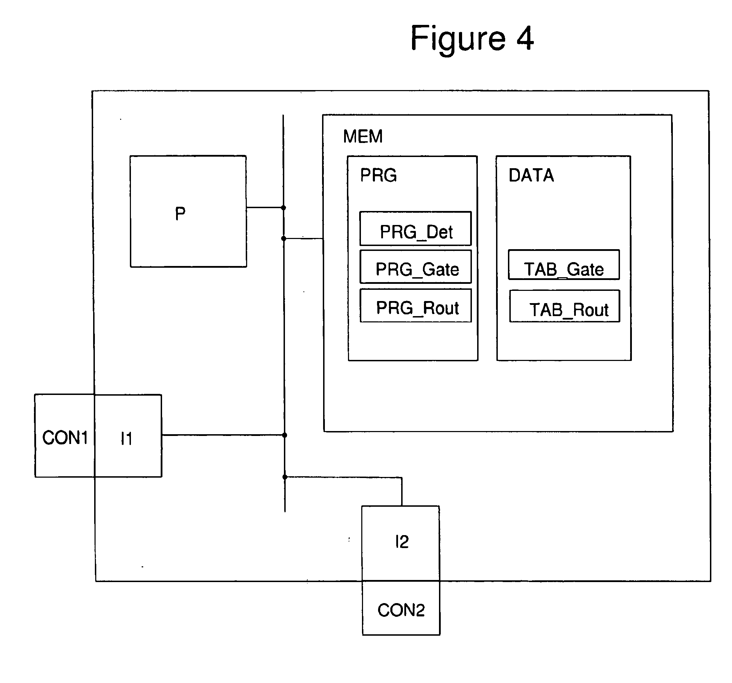

De manière non limitative, comme représenté à la figure 4, l'architecture du dispositif de gestion de communication est par exemple, basée autour d'un calculateur interagissant avec une zone (PRG) mémoire de programmes, une zone (DATA) mémoire de stockage de données et des ports (CON1, CON2) d'entrée ou de sortie. La mémoire (MEM) communique, par exemple, par un bus avec le calculateur (P) et des interfaces (11, 12), chacune associée à un port (CON1, CON2) d'entrée ou de sortie.

De manière non limitative, le dispositif de gestion de communication comprend au moins une interface (11) de communication avec un port (CON1) de connexion à une ligne (Abis1, Abis2, A1) de signalisation, par exemple de type A ou ABis. De manière non limitative, le dispositif de gestion de communication comprend une ou plusieurs interfaces (I2) de communication avec un port (CON2) connecté à un réseau (Res) distinct du réseau cellulaire dans lequel est installé le dispositif de gestion de communication. Ce réseau (Res) supplémentaire est par exemple, le réseau administratif de commande et de gestion des noeuds de communication, par un système central. Bien que la capacité de transport des lignes du réseau d'administration soit moins importante que celle des lignes de transport des données et des lignes de signalisation, des communications peuvent être établies par ce réseau.

De manière non limitative, le dispositif de gestion de communication comprend une interface (12) de communication avec un port (CON2) de connexion à un autre réseau (Res), comme par exemple, un réseau local ou le réseau Internet ou le réseau (Res_SS7) international de communication. De manière non limitative, la connexion à ce réseau est une connexion de type électrique optique ou par radiofréquence. Un dispositif (Secu01, Secu02) de gestion de communication établit par exemple, une communication entre un terminal (Ter011, Ter012, Ter013, Ter021, Ter022) dans la zone couverte par la ou les stations (BS01, BS02) de base en communication avec le dispositif (Secu01, Secu02) de gestion de communication, et avec un terminal (Ter3) relié directement ou indirectement au réseau local ou au réseau Internet ou au réseau international de communication.

Le dispositif de gestion de communication sert par exemple de passerelle (Gat01, Gat02) entre deux réseaux et comprend, par exemple, un programme (PRG_GAT) de gestion des interfaces des réseaux et une table (TAB_GAT) d'adressage dans les réseaux. Le programme (PRG_GAT) de gestion des interfaces comprend par exemple des programmes de codage et de décodage pour chacun des protocoles de transport dans les réseaux distincts. Le programme (PRG_GAT) de gestion des interfaces gère aussi la synchronisation des échanges sur les supports physiques de chacun des réseaux distincts. Le transport de la voix entre deux réseaux cellulaires d'opérateurs différents, comprend, par exemple, un décodage avec un premier codec, d'un premier signal comprenant les données de son, puis un encodage avec un deuxième codec pour produire un deuxième signal comprenant ces données de son. Le premier signal conforme au protocole d'un des deux réseaux est ainsi transformé en un deuxième signal conforme au protocole de l'autre réseau.

La table (TAB_GAT) d'adressage dans les réseaux contient, par exemple, des chemins d'accès dans le réseau cellulaire, comprenant le dispositif de gestion de communication, et des adresses conformes à au moins un réseau (Res) supplémentaire. Les requêtes ou des réponses à des requêtes ou des données transmises passent ainsi par la passerelle et sont traitées pour être acheminées dans l'un ou l'autre des réseaux.

Un terminal dans le réseau cellulaire peut aussi être identifié par le dispositif de gestion de communication, grâce à son identifiant ou grâce à un identifiant de l'utilisateur du terminal. Ces identifiants, par exemple inconnus de l'utilisateur du terminal, sont stockés dans le terminal mobile. L'identifiant du terminal désigné par IMEI (International Mobile Equipment Identity), est par exemple résidant dans un composant propre au terminal. L'identifiant de l'utilisateur, désigné par IMSI (International Mobile Subscriber Identity) est par exemple stocké dans la carte électronique de l'utilisateur, insérée dans le terminal, comme par exemple la carte SIM (Subscriber Identity Module) ou la carte USIM (Universal Subscriber Identity Module). Un terminal peut aussi être identifié par un identifiant déterminé par l'utilisateur du terminal, comme décrit par la suite. De façon non limitative de l'invention, le terminal peut ou non comporter une carte SIM/USIM dans le cas des réseau mobile de technologie 2G/3G, en particulier il est possible de décliner l'invention dans le cas de BTS/Node-B simplement interconnectées entre eux suivant les principes de notre invention, et en travaillant juste au niveau des échanges ATTACH, SETUP et SETUP SPECIAL au niveau des communications avec les téléphones mobiles des abonnés.

Le dispositif de gestion de communication comprend ainsi des composants d'interface physique entre deux réseaux mais aussi des modules logiciels de gestion des différentes couches de communication. Les données transmises d'un réseau à l'autre sont, par exemple, codées selon un protocole déterminé de la couche logicielle de transport.

La gestion des communications est par exemple, réalisée à partir d'une table (TAB_Rout) de routage. Une initialisation comprend par exemple la recherche des liaisons opérationnelles et l'enregistrement de l'ensemble des terminaux (Ter011, Ter012, Ter013, Ter021, Ter022) en communication avec le dispositif (Secu01, Secu02) de gestion de communication activé. La recherche des liaisons opérationnelles est par exemple réalisée à partir d'un ensemble de modules pilotes de transport, également appelés drivers de transport, compris dans le dispositif de gestion de communication. Des requêtes de connexions sont par exemple envoyées vers différents noeuds de communication.

La recherche des liaisons opérationnelles et l'établissement de connexions via ces liaisons, avec des terminaux, sont par exemple réalisés par traitement des requêtes reçues, émises par des noeuds de communication. Le cheminement des requêtes est, par exemple, enregistré pour déterminer un chemin d'accès au noeud de communication. Un test de ces liaisons est, par exemple réalisé, avant une recherche et un enregistrement des terminaux reliés par les noeuds de communication trouvés. Ainsi le dispositif de gestion de communication permet de reconstituer un réseau à partir des liaisons opérationnelles.

Les stations (BS01, BS02) de base en communication avec le dispositif (Secu01, Secu02) de gestion de communication sont, par exemple, toutes commandées réinitialisées. Une station (BS01) de base établit alors une liaison radiofréquence avec chaque terminal (ter011, Ter012, Ter013) présent dans sa zone de couverture. De manière non limitative, l'information acquise et transmise par la station (BS01) de base, est représentative d'un identifiant de chaque terminal associé au gain d'antenne du terminal mobile. La station (BS01) de base transmet, par exemple, ces informations en sortie, sur sa ligne (Abis1, Abis2) de signalisation, associées à son propre identifiant. De manière non limitative, ces informations sont reçues par le dispositif (Secu01, Secu02) de gestion de communication disposé en sortie de la station (BS01) de base ou du contrôleur (SC1) gérant la station de base. La table (TAB_Rout) de routage est, par exemple, initialisée et associe au moins un identifiant du terminal ou de l'utilisateur à chaque terminal en communication avec une station de base communiquant avec le dispositif (Secu01, Secu02) de gestion de communication.

De manière non limitative, chaque identifiant d'un terminal ou de son utilisateur, dans la table de routage, est associé à un attribut représentatif de la station de base ou du noeud de communication auquel ce terminal est relié. Un autre attribut est par exemple représentatif du contrôleur gérant cette station de base. Ainsi un terminal peut être adressé par le dispositif (Secu01, Secu02) de gestion de communications, qui comprend dans la table de routage, les chemins d'accès aux terminaux. Ces chemins d'accès comprennent notamment les noeuds de communication intermédiaires entre le dispositif (Secu01, Secu02) de gestion de communication et les terminaux référencés dans la table (TAB_Rout) de routage. La gestion des communications et l'identification des terminaux peuvent par exemple être réalisées conformément à un réseau adhoc, dans ce cadre tous les principes du réseau adhoc sont exploitables tels que des mécanismes de découverte des noeuds, la gestion des adresses globale, routage des communications : protocoles proactifs (de type : OLSR, DSDV, WRP, GSR, CGSR, liste non limitative), protocoles réactifs (de type : CBRP, AODV, DSR, TORA, ADR, SSR, LAR, liste non limitative) ou protocoles mixtes (de type : ZRP, ZHLS, DDR, liste non limitative), les protocoles de découverte des services, les mécanismes de sécurité (bien que dans le cadre de l'invention, il est souhaitable de minimiser les services de sécurité utilisé), d'une façon plus générale, des composants du réseau MANET (Mobile Adhoc NETwork) peuvent être utilisés afin de bénéficier les études/avancés faites dans ce domaine.

De manière non limitative, un attribut associé à chaque terminal dans la table de routage est représentatif d'un numéro ou d'un type d'utilisateur ou encore d'une chaîne de caractère. Cet attribut est, par exemple, réglé lors d'une étape suivante de seconde identification. L'étape de seconde identification est par exemple réalisée lorsque la table de routage a été initialisée. La seconde identification comprend, par exemple, un dialogue entre le dispositif (Secu01, Secu02) de gestion de communication et chaque terminal. Ce dialogue est par exemple réalisé sous la forme d'envoi de messages courts de type SMS. Un terminal répond par exemple, à un message de texte informatif, par un message de texte comprenant par exemple son numéro de téléphone d'abonné. Le message est par exemple de la forme suivante :
« Réseau en situation d'urgence, veuillez répondre à ce message en indiquant votre numéro de téléphone ».

Un utilisateur du terminal renverra son numéro de téléphone d'abonné qui sera sauvegardé dans la table de routage. Ainsi un appel d'un autre terminal appelant ce numéro d'abonné enregistré, pourra être aiguillé vers ce terminal. Le numéro de téléphone correspondant à ce terminal est en effet mémorisé dans la base de données (BD_VLR) locale ou dans la base de données centrale, qui ne sont plus accessibles dans le cas où la ligne A ou la ligne Abis ne sont plus en état de marche.

De manière non limitative, un terminal peut aussi rentrer une chaîne de caractères afin d'être identifié par son nom, son prénom, son pseudonyme ou tout autre moyen d'identification. Le message est par exemple de la forme suivante :
« Réseau en situation d'urgence, veuillez répondre à ce message en indiquant votre nom ou des informations permettant de vous identifier ».

De manière non limitative, un terminal, appartenant par exemple à un médecin ou un secouriste, pourra être équipé d'un module de réponse automatique à un message de seconde identification, afin de s'identifier dans la table de routage comme secouriste ou comme utilisateur avec un degré de priorité déterminé. Un attribut supplémentaire associé à chaque terminal est par exemple prévu dans la table de routage pour représenter un degré de priorité ou un mode de traitement particulier des communications de cet utilisateur.

Des messages selon le principe dit du « pagging », sont par exemple, transmis à l'ensemble des terminaux se trouvant dans la zone de couverture gérée par le dispositif de gestion de communication. Ces messages comprennent un code d'identification déterminé reconnu par un ou plusieurs terminaux. Le ou les terminaux recevant un message qui ne leur est pas adressé, rejettent ou ignorent ce message, par un mécanisme d'identification du destinataire. Différents terminaux peuvent par exemple être équipés de module de réponse automatique à un message d'identification afin d'être associés dans la table de routage à des codes correspondant à des degrés différents de priorité ou un type déterminé d'utilisateur. Ainsi un utilisateur pourra être associé dans la table de routage à un attribut représentatif de sa fonction de secouriste pour recevoir l'appel d'un terminal appelant vers un numéro d'urgence aiguillé localement, selon la table de routage. Un terminal appelant est ainsi identifié par exemple par son IMSI, son numéro d'abonné étant lu dans la table de routage puis indiqué au destinataire. Le destinataire indiqué par son numéro d'abonné est identifié dans la table de routage puis adressé par son IMSI présent dans la table de routage. Les différents champs associés à chaque terminal dans la table de routage, sont ainsi mis en correspondance pour déterminer les informations nécessaires à l'établissement ou à l'acheminement des appels.

Un terminal (Ter011, Ter012, Ter013, Ter021, Ter022) peut aussi envoyer une requête de façon automatique ou par un message court de type SMS, vers le dispositif (Secu01, Secu02) de gestion de communication, demandant le téléchargement d'un répertoire réalisé à partir de la table de routage. Ce répertoire comprend, par exemple, l'ensemble des numéros IMSI mémorisés, associés ou non à un ou plusieurs identifiants supplémentaires des utilisateurs des terminaux. De cette manière l'utilisateur du terminal pourra appeler les terminaux gérés par le dispositif de gestion de communication, en appelant les numéros IMSI ou les identifiants entrés par les utilisateurs. De cette façon, une personne ayant son terminal disposé dans cette zone de couverture, pourra être appelée, même en cas d'erreur d'identification par l'utilisateur lui-même ou en cas de non identification par l'utilisateur lui-même.

Un programme (PRG_Rout) de gestion des communications effectue par exemple, l'initialisation et le réglage de la table (TAB_Rout) de routage et gère des données entrant et sortant par le port (CON1) de connexion sur la ligne de signalisation. Les communications avec les terminaux sont gérées, par le programme (PRG_Rout) de gestion, de manière non limitative, en respectant le protocole de communication sur la ligne de signalisation en état de marche.

De manière non limitative, le dispositif de gestion de communication gère les ressources de communication par priorité ou accorde une durée maximum déterminée de communication. Une communication est, par exemple, autorisée entre deux terminaux pour une première durée déterminée, ne dépassant pas 3 minutes. Une communication plus longue, par exemple de 10 minutes est, par exemple, autorisée lorsque le numéro appelé est un numéro d'urgence. La communication n'est, par exemple, pas limitée dans le temps, lorsque l'appelant est identifié comme un type déterminé d'utilisateur, comme par exemple un secouriste. Les communications peuvent ainsi être réalisées localement entre les terminaux disposés dans la zone de couverture gérée par le dispositif (Secu01, Secu02) de gestion de communication. De manière non limitative, le dispositif de gestion de communication est multitâche et gère plusieurs communications simultanément.

Le programme (PRG_Rout) de gestion de communication peut aussi interagir avec le programme (PRG_GAT) de gestion des interfaces des réseaux, pour accéder à un réseau supplémentaire et pour établir une communication avec un dispositif via ce réseau (Res). Le dispositif (Secu01, Secu02) de gestion de communication, en communication avec le réseau supplémentaire comme par exemple, le réseau international SS7 ou le réseau Internet ou un réseau local ou le réseau administratif, établit par exemple une liaison avec un serveur d'applicatifs gérant des opérations sur les communications comme par exemple :
- l'établissement de communications,
- le routage,
- la gestion des différents types de communication.

Une communication peut aussi être établie avec un terminal (Ter3) du réseau (Res) supplémentaire ou avec un dispositif d'un troisième réseau comprenant une passerelle vers le réseau supplémentaire. Deux stations de base chacune isolée de leur contrôleur, peuvent par exemple, être reliées par une connexion locale via une liaison radiofréquence de type WIFI, gérée par leur dispositif de gestion de communication associé. Un ou plusieurs dispositifs de gestion de communication transmettent, par exemple, leur table de routage afin de pouvoir recevoir des demandes d'établissement de communication. De façon avantageuse, des stations de base de plusieurs réseaux cellulaires distincts pourront ainsi communiquer entre elles. Les noeuds de communication en état de marche appartenant à des réseaux de téléphonie cellulaire de deux opérateurs distincts, pourront ainsi être reliés entre eux afin de mettre toutes les ressources disponibles en commun. De manière non limitative, un programme de codage et de décodage de la voix, de substitution sera utilisé par chacun des terminaux sur différents réseaux cellulaires, lors d'une situation d'urgence. Un mode de codage commun facilite ainsi la transmission des données. De plus ce mode de codage peut être réalisé avec une qualité d'encodage optimisée, c'est-à-dire que la qualité d'encodage est dégradée afin de baisser le volume des données à transmettre et optimiser les ressources disponibles. Dans le cadre d'une mise en oeuvre de service d'urgence pour une zone de catastrophe commune à plusieurs opérateurs de téléphonie mobile, l'invention utilise la capacité de l'ensemble des terminaux déployés de pouvoir adapter leurs capacités aux capacités requises par les éléments de réseau.

De manière non limitative, la table de routage est adaptée aux modes de localisation géographique des terminaux mobiles par triangulation. La table comprend, par exemple, un attribut représentatif des gains d'antenne associés à chaque terminal mobile lors d'une connexion avec la station de base. Ces informations peuvent ainsi être croisées avec les gains d'antennes pour des stations de base voisines et ainsi, par triangulation, localiser un ou plusieurs terminaux mobiles. Ce point est particulièrement important dans le cadre des services d'urgence pour la localisation des utilisateurs. Il est possible de plus d'optimiser cette localisation par un usage d'un plan de fréquence plus riche sur les balises radio des opérateurs de téléphonies interconnectées, puisque dans le cadre des activités en situation d'urgence, la totalité des plans de fréquence alloués à l'ensemble de ces opérateurs géographiquement présent sur la zone sont disponibles et donc ré-allouables sur l'ensemble des équipement radio indépendamment des opérateurs de rattachement.

Pour garder une station de base ou un contrôleur en état de marche, même en cas de détériorations sur le réseau de télécommunication et sur le réseau d'alimentation en énergie électrique, des réserves d'énergie peuvent être prévues, dans des zones géographiques sensibles, comme par exemple des zones géographiques à risque pour l'utilisateur ou des zones géographiques potentiellement exposées à un risque de catastrophe naturelle. Ainsi l'activité de la station de base ou du contrôleur peut être prolongée. Ces réserves sont par exemple réalisées sous la forme de condensateurs à forte capacité ou de batteries chimiques, alimentés, de manière non limitative, par des panneaux solaires.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de gestion de communication (Secu01, Secu02) comprenant des moyens de mémorisation et des moyens de traitement, disposé dans un réseau de télécommunication comprenant au moins une station (BS01) de base en liaison par ondes radiofréquences avec au moins un premier terminal, la station (BS01) de-base étant reliée, par une première ligne (Abis1) de communication, à un dispositif (SC1) contrôleur de la station de base, le dispositif (SC1) contrôleur étant relié, par une seconde ligne (A) de communication, à un routeur- (Rout1), **caractérisé en ce que** le dispositif est disposé sur la première ou respectivement la seconde ligne, et est activé, par des moyens d'activation en cas de dégradation de la première ou respectivement de la seconde ligne et **en ce que** le dispositif comprend au moins un programme de recherche de terminaux reliés et de gestion de communication, activable en cas de catastrophe,
implanté directement dans les moyens de mémorisation du dispositif de gestion de communication et implémenté par les moyens de traitement du dispositif de gestion de communication,
ou implanté dans les moyens de mémorisation d'une station de base ou les moyens de mémorisation d'un dispositif contrôleur et implémenté par des moyens de traitement de la station de base ou des moyens de traitement du dispositif contrôleur respectivement, ou résidant dans une clé ou une cartouche et connectable à la place de la ligne de communication détériorée, le programme contenant des modules logiciels de gestion suivants pour simuler au moins trois couches de communication :
- un module de gestion de communication prenant la forme d'un programme (PRG_Rout) pour simuler une couche de médiation permettant de rendre compatibles des commandes de gestion enregistrées dans une couche ad hoc avec des commandes connues de la station de base ou du-dispositif contrôleur, ou d'envoyer des réponses factices de façon à respecter le protocole de communication avec la station de base ou le- dispositif contrôleur, à cette fin le dispositif de gestion de communication comprenant un port (CON1) de connexion sur une ligne de signalisation,
- un ensemble de modules de transport prenant la forme d'un programme (PRG_GAT) de gestion d'interfaces de réseaux pour simuler une couche de transport permettant de convertir des messages dans les protocoles des différents réseaux encore utilisables et de diffuser ces messages, à cette fin le dispositif de gestion de communication comprenant une ou plusieurs interfaces (I2) de communication avec un port (CON2) connecté à un réseau (Res) distinct du réseau de télécommunication,
ces modules interagissant entre eux et recherchant des liaisons opérationnelles afin d'établir et utiliser des tables de routage (TAB_Rout, TAB_GAT), ces tables de routage étant enregistrées dans ladite couche ad hoc.

2. Dispositif de gestion de communication, selon la revendication 1, caractérisé en qu'il comprend au moins une table mémorisée comprenant des données associées à chacun des terminaux reliés par au moins une liaison radiofréquence, électrique ou optique, au dispositif de gestion de communication, les données associées à chacun des terminaux comprenant-au moins :
- une donnée représentative d'un identifiant du terminal ou de son utilisateur, résidant en mémoire de chaque terminal,
- une donnée représentative d'un identifiant déterminé par l'utilisateur du terminal,
le dispositif de gestion de communication activé, commandant, par ses moyens de traitement, l'établissement d'au moins une communication entre le premier terminal et un second terminal parmi les terminaux reliés au dispositif de gestion de communication.

3. Dispositif de gestion de communication selon les revendications 1 et 2, **caractérisé en ce qu'**il comprend des moyens de recherche de connexions possibles via différentes ressources disponibles et d'établissement des liaisons radiofréquences, électriques ou optiques avec les terminaux reliés.

4. Dispositif de gestion de communication selon une des revendications 1 ou 3, **caractérisé en ce qu'**il est disposé sur la première ligne (Abis1) et commande, dans son état activé, l'établissement de la communication par au moins un canal radiofréquence déterminé dans la station de base, associé au premier terminal.

5. Dispositif de gestion dé communication selon une des revendications 1 ou 3, **caractérisé en ce qu'**il est disposé sur la seconde ligne (A1), la table comprenant des données représentatives d'un chemin d'accès, associées à chacun des terminaux reliés au dispositif de gestion de communication, le chemin d'accès du premier terminal comprenant au moins un identifiant de la station de base et du réseau auquel cette station de base reste reliée.

6. Dispositif de gestion de communication selon l'une des revendications 1 à 5, **caractérisé en ce qu'**il comprend une passerelle vers au moins :
- un réseau d'administration des noeuds de communication ou
- le réseau Internet ou
- un réseau local radiofréquence ou
- un réseau cellulaire radiofréquence.

7. Dispositif de gestion de communication selon l'une des revendications 1 à 6, **caractérisé en ce qu'**il est activé par un branchement manuel de connecteurs réalisé par un opérateur ou est activé automatiquement par un dispositif de détection d'une panne ou d'une coupure sur la première ou la seconde ligne de communication.

8. Dispositif de gestion de communication selon l'une des revendications 1 à 7, **caractérisé en ce que** la donnée résidant en mémoire de chaque terminal représentative d'un identifiant du terminal est le code IMEI (International Mobile Equipment Identity),
la donnée résidant en mémoire de chaque terminal représentative d'un identifiant de l'utilisateur du terminal est le code IMSI (International Mobile Subscriber Identity),
la donnée représentative d'un identifiant déterminé par l'utilisateur du terminal est son numéro d'abonné ou correspond à un code d'appel d'urgence.

9. Dispositif de gestion de communication selon la revendication 8, **caractérisé en ce que** le dispositif de gestion de communication établit une communication entre deux terminaux selon :
- des tranches temporelles déterminées d'alternance des communications ou
- une première durée maximum déterminée pour une communication entre deux utilisateurs identifiés par leur numéro d'abonné,
- une deuxième durée maximum déterminée supérieure à la première, pour une communication entre un utilisateur identifié par son numéro d'abonné appelant un utilisateur identifié par un code d'appel d'urgence,
- une durée illimitée pour une communication initiée par un utilisateur identifié par un code d'appel d'urgence.

10. Dispositif de gestion de communication selon l'une des revendications 1 à 9 **caractérisé en ce que** le dispositif de gestion dé communication envoie à l'ensemble des terminaux qui lui sont reliés, au moins un type de message comprenant des données représentatives d'un code d'identification nécessaire à l'acceptation du message.

11. Dispositif dé gestion de communication selon l'une des revendications 1 à 10, **caractérisé en ce qu'**il commande la réinitialisation de ladite station de base, la table comprenant un type de donnée réglée dans un état représentatif du gain d'antenne transmis à la connexion avec ladite station de base.

12. Réseau de télécommunication comprenant au moins une station (BS01) de base en liaison par ondes radiofréquences avec au moins un premier terminal, la station (BS01) de base étant reliée, par une première ligne (Abis1) de communication, à un dispositif (SC1) contrôleur de la station de base, le dispositif (SC1) contrôleur étant relié, par une seconde ligne (A) de communication, à un routeur (Rout1), **caractérisé en ce que** le réseau comprend, sur au moins la première ou respectivement la seconde ligne de communication, un dispositif de gestion de communication (Secu01, Secu02) comprenant des moyens de traitement et des moyens de mémorisation d'au moins un programme de recherche de terminaux reliés et de gestion de communication, activable en cas de catastrophe, le dispositif de gestion de communication étant activé, par des moyens d'activation en cas de dégradation de la première ou respectivement de la seconde ligne, et **en ce que** le programme est implanté directement dans les moyens de mémorisation du dispositif de gestion de communication et implémenté par les moyens de traitement du dispositif de gestion de communication, ou est implanté dans les moyens de mémorisation d'une station de base ou les moyens de mémorisation d'un dispositif contrôleur et implémenté par des moyens de traitement de la station de base ou des moyens de traitement du dispositif contrôleur respectivement, ou résidant dans une clé ou une cartouche et connectable à la plate de la ligne de communication détériorée, le programme contenant des modules logiciels de gestion suivants pour simuler au moins trois couches de communication :
- un module de gestion de communication prenant la forme d'un programme (PRG_Rout) pour simuler une couche de médiation permettant de rendre compatibles des commandes de gestion enregistrées dans une couche ad hoc avec des commandes connues de la station de base ou du dispositif contrôleur, ou d'envoyer des réponses factices de façon à respecter le protocole de communication avec la station de base ou le dispositif contrôleur, à cette fin le dispositif de gestion de communication comprenant un port (CON1) de connexion sur une ligne de signalisation,
- un ensemble de modules de transport prenant la forme d'un programme (PRG_GAT) de gestion d'interfaces de réseaux pour simuler une couche de transport permettant de convertir des messages dans les protocoles des différents réseaux encore utilisables et de diffuser ces messages, à cette fin le dispositif de gestion de communication comprenant une ou plusieurs interfaces (12) dé communication avec un port (CON2) connecté à un réseau (Res) distinct du réseau de télécommunication,
ces modules interagissant entre eux et recherchant des liaisons opérationnelles afin d'établir et utiliser des tables de routage (TAB_Rout, TAB_GAT), ces tables de routage étant enregistrées dans ladite couche ad hoc.

13. Réseau de télécommunication selon la revendication 12, **caractérisé en ce que** le dispositif de gestion de communication comprend au moins une table mémorisée comprenant des données associées à chacun des terminaux reliés par au moins une liaison radiofréquence, électrique ou optique, au dispositif de gestion de communication, les données associées à chacun des terminaux comprenant au moins :
- une donnée représentative d'un identifiant du terminal ou de son utilisateur, résidant en mémoire de chaque terminal,
- une donnée représentative d'un identifiant déterminé par l'utilisateur du terminal,
le dispositif de gestion de communication activé, effectuant, par des modules de gestion de transport de son programme la recherche des liens de communication encore disponibles sur différents réseaux reliés au dispositif de gestion de communication et diffusant sur ces réseaux lors de la recherche de connexions avec au moins un second terminal, un message d'appel du second terminal puis enregistrant dans sa table le cheminement lors de la réponse du second terminal.

## Patentansprüche

1. Vorrichtung zum Lenken von Kommunikation (Secu01, Secu02), die Speichermittel und Verarbeitungsmittel umfasst, angeordnet in einem Telekommunikationsnetz, das wenigstens eine Basisstation (BS01) umfasst, über Funkfrequenzwellen in Verbindung mit wenigstens einem ersten Terminal, wobei die Basisstation (BS01) durch eine erste Kommunikationsleitung (Abis1) mit einem Controller (SC1) der Basisstation verbunden ist, wobei der Controller (SC1) durch eine zweite Kommunikationsleitung (A) mit einem Router (Rout1) verbunden ist, **dadurch gekennzeichnet, dass** die Vorrichtung auf der ersten bzw. der zweiten Leitung angeordnet ist und im Falle einer Qualitätsminderung der ersten bzw. zweiten Leitung durch Aktivierungsmittel aktiviert wird, und dadurch, dass die Vorrichtung wenigstens ein im Katastrophenfall aktivierbares Programm zum Suchen nach angeschlossenen Terminals und zum Lenken von Kommunikation umfasst,
direkt im Speichermittel der Kommunikationslenkungsvorrichtung installiert und durch Verarbeitungsmittel der Kommunikationslenkungsvorrichtung implementiert,
oder im Speichermittel einer Basisstation oder im Speichermittel eines Controllers installiert und durch Verarbeitungsmittel der Basisstation bzw. durch Verarbeitungsmittel des Controllers implementiert oder in einem Schlüssel oder einer Speicherkarte befindlich und anstelle der qualitätsgeminderten Kommunikationsleitung anschließbar, wobei das Programm nachfolgende Lenkungssoftwaremodule zum Simulieren von wenigstens drei Kommunikationsschichten enthält;
- wobei ein Kommunikationslenkungsmodul die Form eines Programms (PRG_Rout) zum Simulieren einer Vermittlungsschicht annimmt, die es zulässt, in einer Adhoc-Schicht registrierte Lenkbefehle mit bekannten Befehlen der Basisstation oder des Controllers kompatibel zu machen oder Dummy-Antworten zu schicken, um das Kommunikationsprotokoll mit der Basisstation oder dem Controller einzuhalten, wobei die Kommunikationslenkungsvorrichtung zu diesem Zweck einen Anschlussport (CON1) auf einer Signalleitung umfasst,
- einen Satz von Transportmodulen, die die Form eines Lenkungsprogramms (PRG_GAT) von Netzschnittstellen zum Simulieren einer Transportschicht annehmen, die es zulässt, Nachrichten in den Protokollen verschiedener noch nutzbarer Netze umzuwandeln und diese Nachrichten zu verteilen, wobei die Kommunikationslenkungsvorrichtung zu diesem Zweck eine oder mehrere Kommunikationsschnittstellen (I2) mit einem Port umfasst, der mit einem von dem Telekommunikationsnetz getrennten Netz (Res) verbunden ist,
wobei diese Module untereinander interagieren und funktionsfähige Verbindungen suchen, um Routingtabellen (TAB_Rout, TAB_GAT) zu erstellen und zu nutzen, wobei diese Routingtabellen in der Adhoc-Schicht registriert sind.

2. Kommunikationslenkungsvorrichtung nach Anspruch 1, **dadurch gekennzeichnet, dass** sie wenigstens eine gespeicherte Tabelle umfasst, die mit jedem der Terminals assoziierte Daten umfasst, die über wenigstens eine Funkfrequenzverbindung, elektrisch oder optisch, mit der Kommunikationslenkungsvorrichtung verbunden sind, wobei die mit jedem der Terminals assoziierten Daten wenigstens Folgendes umfassen:
- Daten, die eine Kennung des Terminals oder seines Benutzers repräsentieren und sich im Speicher jedes Terminals befinden,
- Daten, die eine vom Benutzer des Terminals bestimmte Kennung repräsentieren,
wobei die aktivierte Kommunikationslenkungsvorrichtung mit ihren Verarbeitungsmitteln den Aufbau von wenigstens einer Kommunikation zwischen dem ersten Terminal und einem zweiten Terminal unter den Terminals steuert, die an die Kommunikationslenkungsvorrichtung angeschlossen sind.

3. Kommunikationslenkungsvorrichtung nach den Ansprüchen 1 und 2, **dadurch gekennzeichnet, dass** sie Mittel zum Suchen von möglichen Verbindungen über verschiedene verfügbare Ressourcen und zum Aufbauen von Funkfrequenzverbindungen, elektrisch oder optisch, mit den angeschlossenen Terminals umfasst.

4. Kommunikationslenkungsvorrichtung nach einem der Ansprüche 1 oder 3, **dadurch gekennzeichnet, dass** sie auf der ersten Leitung (Abis1) angeordnet ist und in ihrem aktivierten Zustand den Aufbau der Kommunikation durch wenigstens einen ermittelten Funkfrequenzkanal in der Basisstation in Assoziation mit dem ersten Terminal steuert.

5. Kommunikationslenkungsvorrichtung nach einem der Ansprüche 1 oder 3, **dadurch gekennzeichnet, dass** sie auf der zweiten Leitung (A1) angeordnet ist, wobei die Tabelle Daten umfasst, die einen Zugriffspfad repräsentieren, mit jedem der an die Kommunikationslenkungsvorrichtung angeschlossenen Terminals assoziiert, wobei der Zugriffspfad des ersten Terminals wenigstens eine Kennung der Basisstation oder des Netzes umfasst, mit dem diese Basisstation verbunden bleibt.

6. Kommunikationslenkungsvorrichtung nach einem der Ansprüche 1 bis 5, **dadurch gekennzeichnet, dass** sie eine Brücke umfasst zu wenigstens:
- einem Netz zum Verwalten von Kommunikationsknoten oder
- dem Internet oder
- einem lokalen Funkfrequenznetz oder
- einem zellulären Funkfrequenznetz.

7. Kommunikationslenkungsvorrichtung nach einem der Ansprüche 1 bis 6, **dadurch gekennzeichnet, dass** sie durch eine manuelle Verzweigung von Verbindern, realisiert durch einen Operator, oder automatisch durch eine Vorrichtung zum Erkennen einer Störung oder einer Unterbrechung auf der ersten oder zweiten Kommunikationsleitung aktiviert wird.

8. Kommunikationslenkungsvorrichtung nach einem der Ansprüche 1 bis 7, **dadurch gekennzeichnet, dass** die im Speicher jedes Terminals befindlichen Daten, die eine Kennung des Terminals repräsentieren, der IMEI-(International Mobile Equipment Identity)-Code sind,
die im Speicher jedes Terminals befindlichen Daten, die eine Kennung des Benutzers des Terminals repräsentieren, der IMSI-(International Mobile Subscriber Identity) -Code sind,
die Daten, die eine Kennung repräsentieren, bestimmt durch den Benutzer des Terminals, dessen Teilnehmernummer sind oder einem Notrufcode entsprechen.

9. Kommunikationslenkungsvorrichtung nach Anspruch 8, **dadurch gekennzeichnet, dass** die Kommunikationslenkungsvorrichtung eine Kommunikation zwischen zwei Terminals aufbaut gemäß:
- bestimmten abwechselnden Kommunikationszeitscheiben oder
- einer ersten maximalen Dauer, ermittelt für eine Kommunikation zwischen zwei durch die Teilnehmernummer identifizerten Benutzern,
- einer zweiten ermittelten absoluten Dauer, die länger ist als die erste, für eine Kommunikation zwischen einem durch seine Teilnehmernummer identifizierten Benutzer, der einen durch einen Notrufcode identifizierten Benutzer anruft,
- einer begrenzten Dauer für eine Kommunikation, die von einem durch einen Notrufcode identifizierten Benutzer eingeleitet wird.

10. Kommunikationslenkungsvorrichtung nach einem der Ansprüche 1 bis 9, **dadurch gekennzeichnet, dass** die Kommunikationslenkungsvorrichtung wenigstens einen Nachrichtentyp zu dem Satz von daran angeschlossenen Terminals sendet, der Daten enthält, die einen zum Akzeptieren der Nachricht notwendigen Identifikationscode repräsentieren.

11. Kommunikationslenkungsvorrichtung nach einem der Ansprüche 1 bis 10, **dadurch gekennzeichnet, dass** sie die Reinitialisierung der Basisstation steuert, wobei die Tabelle einen Datentyp umfasst, der in einem Zustand geregelt wird, der den auf der Verbindung mit der Basisstation übertragenen Antennengewinn repräsentiert.

12. Kommunikationsnetz, das wenigstens eine Basisstation (BS01) umfasst, die über Funkfrequenzwellen mit wenigstens einem ersten Terminal verbunden ist, wobei die Basisstation (BS01) durch eine erste Kommunikationsleitung (Abis1) mit einem Controller (SC1) der Basisstation verbunden ist, wobei der Controller (SC1) durch eine zweite Kommunikationsleitung (A) mit einem Router (Rout1) verbunden ist, **dadurch gekennzeichnet, dass** das Netz auf wenigstens der ersten bzw. der zweiten Kommunikationsleitung eine Kommunikationslenkungsvorrichtung (Secu01, Secu02) umfasst, die Verarbeitungsmittel und Speichermittel für wenigstens ein im Katastrophenfall aktivierbares Programm zum Suchen von angeschlossenen Terminals und zum Lenken von Kommunikation umfasst, wobei die Kommunikationslenkungsvorrichtung im Falle einer Qualitätsminderung der ersten bzw. zweiten Leitung durch Aktivierungsmittel aktiviert wird, und dadurch, dass das Programm direkt in den Speichermitteln der Kommunikationslenkungsvorrichtung installiert und durch Verarbeitungsmittel der Kommunikationslenkungsvorrichtung implementiert wird oder im Speichermittel einer Basisstation oder im Speichermittel eines Controllers installiert und durch Verarbeitungsmittel der Basisstation bzw. Verarbeitungsmittel des Controllers implementiert wird oder sich in einem Schlüssel oder einer Speicherkarte befindet und anstelle der qualitätsgeminderten Kommunikationsleitung angeschlossen werden kann, wobei das Programm die folgenden Lenkungssoftwaremodule zum Simulieren von wenigstens drei Kommunikationsschichten enthält:
- ein Kommunikationslenkungsmodul, das die Form eines Programms (PRG_Rout) zum Simulieren einer Vermittlungsschicht annimmt, die es zulässt, in einer Adhoc-Schicht registrierte Verwaltungsbefehle mit bekannten Befehlen der Basisstation oder des Controllers kompatibel zu machen oder Dummy-Antworten zu schicken, um das Kommunikationsprotokoll mit der Basisstation oder dem Controller einzuhalten, wobei die Kommunikationslenkungsvorrichtung zu diesem Zweck einen Verbindungsport (CON1) auf einer Signalleitung umfasst,
- einen Satz von Transportmodulen, die die Form eines Programms (PRG_GAT) zum Lenken von Netzschnittstellen zum Simulieren einer Transportschicht annehmen, die es zulässt, Nachrichten in den Protokollen verschiedener noch nutzbarer Netze umzuwandeln und diese Nachrichten zu verteilen, wobei di.e Kommunikationslenkungsvorrichtung zu diesem Zweck eine oder mehrere Kommunikationsschnittstellen (12) mit einem Port (CON2) umfasst, der mit einem von dem Telekommunikationsnetz getrennten Netz (Res) verbunden ist,
wobei diese Module untereinander interagieren und funktionsfähige Verbindungen suchen, um Routingtabellen (TAB_Rout, TAB_GAT) zu erstellen und zu nutzen, wobei diese Routingtabellen in der Adhoc-Schicht registriert sind.

13. Telekommunikationsnetz nach Anspruch 12, **dadurch gekennzeichnet, dass** die Kommunikationslenkungsvorrichtung wenigstens eine gespeicherte Tabelle umfasst, die Daten in Assoziation mit jedem der Terminals umfasst, die über wenigstens eine Funkfrequenzverbindung, elektrisch oder optisch, mit der Kommunikationslenkungsvorrichtung verbunden sind, wobei die mit jedem der Terminals assoziierten Daten wenigstens Folgendes beinhalten:
- Daten, die eine Kennung des Terminals oder seines Benutzers repräsentieren und sich im Speicher jedes Terminals befinden,
- Daten, die eine durch den Benutzer des Terminals bestimmte Kennung repräsentieren,
wobei die aktivierte Kommunikationslenkungsvorrichtung durch Module zum Lenken des Transports ihres Programms die Suche nach noch verfügbaren Kommunikationsverbindungen auf verschiedenen Netzen durchführt, die mit der Kommunikationslenkungsvorrichtung verbunden sind, und auf diesen Netzen bei der Suche nach Verbindungen mit wenigstens einem zweiten Terminal eine Nachricht zum Anrufen des zweiten Terminals verteilen und dann in der Leitwegtabelle während der Antwort des zweiten Terminals registrieren.

## Claims

1. Device for communication management (Secu01 Secu02) comprising storage means and processing means, disposed in a telecommunications network comprising at least one base station (BS01) linked by radio frequency waves with at least a first terminal, the base station (BS01) being connected, by a first communication line (Abis1), to a device (SC1) for controlling the base station, the controlling device (SC1) being connected, by a second communication line (A), to a router (Rout1), **characterised in that** the device is disposed on the first or respectively the second line, and is activated, by means for activation in the event of degradation of the first or respectively the second line and **in that** the device comprises at least one programme for searching for connected terminals and for communication management, activatable in the event of a disaster,
installed directly in the storage means of the device for communication management, and implemented by the processing means of the device for communication management, or installed in the storage means of a base station or the storage means of a controlling device and implemented by processing means of the base station or processing means of the controlling device respectively, or residing in a key or a cartridge and connectable in the place of the damaged communication line, the programme containing the following management software modules to simulate at least three layers of communication:
- a module for communication management taking the form of a programme (PRG_Rout) to simulate a layer of mediation making it possible to make management commands recorded in an ad hoc layer compatible with known commands of the base station or the controlling device, or to send dummy replies so as to conform to the protocol for communication with the base station or the controlling device, to this end the device for communication management comprising a port (CON1) for connection to a signalling line,
- a set of transport modules taking the form of a programme (PRG_GAT) for management of interfaces of networks to simulate a transport layer making it possible to convert messages in the protocols of the different networks which are still usable and to broadcast these messages, to this end the device for communication management comprising one or more interfaces (12) for communication with a port (CON2) connected to a network (Res) distinct from the telecommunications network, these modules interacting with one another and searching for operational links in order to establish and use routing tables (TAB_Rout, TAB_GAT), these routing tables being recorded in said ad hoc layer.

2. Device for communication management, according to claim 1, **characterised in that** it comprises at least one stored table comprising data associated with each of the terminals linked by at least one radio frequency, electrical or optical link to the device for communication management, the data associated with each of the terminals comprising at least:
- an item of data representative of an identifier of the terminal or of its user, residing in the memory of each terminal,
- an item of data representative of an identifier determined by the user of the terminal,
the activated device for communication management controlling, by its processing means, the establishment of at least a communication between the first terminal and a second terminal among the terminals connected to the device for communication management.

3. Device for communication management according to claims 1 and 2, **characterised in that** it comprises means for searching for possible connections via different available resources and establishing radio frequency, electrical or optical links with the connected terminals.

4. Device for communication management according to one of claims 1 or 3, **characterised in that** it is disposed on the first line (Abis1) and, in its activated state, controls the establishment of the communication by at least one radio frequency channel determined in the base station, associated with the first terminal.

5. Device for communication management according to one of claims 1 or 3, **characterised in that** it is disposed on the second line (A1), the table comprising data representative of an access route, associated with each of the terminals connected to the device for communication management, the access route of the first terminal comprising at least one identifier of the base station and of the network to which that base station remains linked.

6. Device for communication management according to one of claims 1 to 5, **characterised in that** it comprises a gateway to at least:
- a network for administration of the communication nodes or
- the Internet network or
- a local radio frequency network or
- a cellular radio frequency network.

7. Device for communication management according to one of claims 1 to 6, **characterised in that** it is activated by manual connection of connectors carried out by an operator or is activated automatically by a device for detection of a fault or a break in the first or the second communication line.

8. Device for communication management according to one of claims 1 to 7, **characterised in that** the item of data residing in the memory of each terminal representative of an identifier of the terminal is the IMEI (International Mobile Equipment Identity) code,
the item of data residing in the memory of each terminal representative of an identifier of the user of the terminal is the IMSI (International Mobile Subscriber Identity) code,
the item of data representative of an identifier determined by the user of the terminal is the subscriber number of the user or corresponds to an emergency call code.

9. Device for communication management according to claim 8, **characterised in that** the device for communication management establishes a communication between two terminals:
- with predetermined time slots for alternating communications or
- a predetermined first maximum time for a communication between two users identified by their subscriber number,
- a predetermined second maximum time greater than the first for communication between a user identified by the subscriber number of the user calling a user identified by an emergency call code,
- an unlimited time for communication initiated by a user identified by an emergency call code.

10. Device for communication management according to one of claims 1 to 9, **characterised in that** the device for communication management sends all the terminals connected to it, at least one type of message comprising data representative of an identification code necessary for acceptance of the message.

11. Device for communication management according to one of claims 1 to 10, **characterised in that** it controls the re-initialisation of said base station, the table comprising a type of data set in a state representative of the antenna gain transmitted to the connection with said base station.

12. Telecommunications network comprising at least one base station (BS01) linked by radio frequency waves with at least a first terminal, the base station (BS01) being connected, by a first communication line (Abis1), to a device (SC1) controlling the base station, the controlling device (SC1) being connected, by a second communication line (A), to a router (Rout1), **characterised in that** the network comprises, on at least the first or respectively the second communication line, a device for communication management (Secu01, Secu02) comprising means for processing and means for storage of at least one programme for searching for connected terminals and for communication management, activatable in the event of a disaster, the device for communication management being activated, by means for activation in the event of degradation of the first or respectively the second line, and **in that** the programme is installed directly in the storage means of the device for communication management and implemented by the processing means of the device for communication management, or is installed in the storage means of a base station or the storage means of a controlling device and implemented by processing means of the base station or processing means of the controlling device respectively, or residing in a key or a cartridge and connectable in the place of the damaged communication line, the programme containing the following management software modules to simulate at least three layers of communication:
- a module for communication management taking the form of a programme (PRG_Rout) to simulate a layer of mediation making it possible to make management commands recorded in an ad hoc layer compatible with known commands of the base station or the controlling device, or to send dummy replies so as to conform to the protocol for communication with the base station or the controlling device, to this end the device for communication management comprising a port (CON1) for connection to a signalling line,
- a set of transport modules taking the form of a programme (PRG_GAT) for management of interfaces of networks to simulate a layer of transport making it possible to convert messages in the protocols of the different networks which are still usable and to broadcast these messages, to this end the device for managing communication comprising one of more interfaces (I2) for communication with a port (CON2) connected to a network (Res) distinct from the telecommunications network,
these modules interacting with one another and searching for operational links in order to establish and use routing tables (TAB_Rout, TAB_GAT), these routing tables being recorded in said ad hoc layer.

13. Telecommunications network according to claim 12, **characterised in that** the device for communication management comprises at least one stored table comprising data associated with each of the terminals connected by at least one radio frequency, electrical or optical link to the device for communication management, the data associated with each of the terminals comprising at least:
- an item of data representative of an identifier of the terminal or its user, residing in the memory of each terminal,
- an item of data representative of an identifier determined by the user of the terminal,
the activated device for communication management searching, by means of modules for management of transport of its programme, for the communication links which are still available on different networks connected to the device for communication management and broadcasting over these networks when searching for connections with at least a second terminal, a message calling the second terminal then recording in its table the routing when the second terminal responds.
